# DEMANDE DE BREVET EUROPEEN

(11) **EP 1 247 710 A1**
(43) Date de publication de la demande: **09.10.2002**
(21) Numéro de dépôt: 02290778.6
(22) Date de dépôt: 28.03.2002
(51) Int. Cl.: B60T 7/06

(54) **Ensemble de pédale de frein pour un véhicule automobile**

(30) Priorité: 04.04.2001 FR 0104546
(71) Demandeur: Renault s.a.s., 92100 Boulogne Billancourt (FR)
(72) Inventeur: Mencarelli, Franck, 78180 Montigny le Bretonneux (FR); Martz, Philippe, 78000 Versailles (FR)

(57) **Abrégé**

Dans cet ensemble comprenant un support (2) dans lequel la pédale (4) est montée sur un axe de rotation (5) pour actionner un organe de frein (12) par l'intermédiaire d'un levier de commande (11), à la pédale (4) est associé un bras secondaire (6) monté également rotatif sur l'axe de rotation (5) indépendamment de la pédale (4), sur lequel est articulé le levier de commande (11), la pédale (4) et le bras (6) étant accouplés par un élément de liaison pour être solidarisés en rotation autour de l'axe (5).

A cet élément de liaison, sont associés des moyens de libération (8, 9) coopérant avec un élément d'appui fixe (10) pour rendre inopérant ledit élément de liaison (7) afin de libérer en rotation la pédale (4) d'avec le bras (6) en cas de recul dans l'habitacle du support de pédale lors d'un choc.

## Description

La présente invention concerne un ensemble de pédale de frein assurant la libération de la pédale lors d'un choc entraînant son recul dans l'habitacle du véhicule.

Il existe déjà des systèmes de montage de pédale de frein prévus pour éviter ou réduire les lésions dans la jambe d'appui du conducteur au cas où un choc frontal ou dirigé vers l'arrière provoque le recul dans l'habitacle du support de pédale ; tel le dispositif décrit et revendiqué dans la demande de brevet EP 0965506 déposée au nom de la présente demanderesse, et intitulée "Dispositif de montage d'une pédale d'un véhicule". Ce dispositif comprend un support de pédale monté sur le tablier avant du véhicule et portant un axe principal de rotation de la pédale, et des moyens de cisaillage coopérant avec une partie fixe du véhicule pour sectionner ledit axe principal en cas de recul dans l'habitacle dudit support, de façon à en libérer la pédale.

La présente invention est une alternative à ce dispositif, conçue dans un même but d'efficacité et de simplicité.

L'ensemble de pédale de frein selon l'invention comprend un support de pédale dans lequel ladite pédale est montée rotative autour d'un axe de rotation de pédale transversal pour actionner un organe de frein par l'intermédiaire d'un levier de commande, et il est caractérisé en ce qu'à ladite pédale est associé un bras secondaire monté apte à tourner autour dudit axe de rotation de pédale indépendamment de ladite pédale, sur lequel est articulé ledit levier de commande, en ce que la pédale et ledit bras secondaire sont accouplés par un élément de liaison en un point distant dudit axe de rotation de pédale pour être solidarisés en rotation autour de celui-ci, et en ce qu'audit élément de liaison sont associés des moyens de libération coopérant avec un élément d'appui solidaire d'une partie sensiblement fixe du véhicule pour rendre inopérant ledit élément de liaison afin de libérer en rotation la pédale d'avec ledit bras secondaire en cas de recul dans l'habitacle dudit support de pédale lors d'un choc frontal ou dirigé vers l'arrière.

Ledit élément de liaison entre la pédale et ledit bras est avantageusement une tige transversale engagée dans deux trous traversants formés respectivement dans la pédale et dans ledit bras secondaire, lesdits moyens de libération comprenant un poussoir disposé en bout de ladite tige pour la chasser complètement de l'un desdits trous de la pédale et dudit bras secondaire.

Et dans une forme de réalisation préférée de l'invention, ledit poussoir est un pion en saillie sur l'extrémité libre d'une patte déformable soudée sur le côté de la pédale, ladite patte ayant un profil en Z et étant déformable par aplatissement par un élément mobile desdits moyens de libération, lequel élément mobile' peut être un levier pivotant.

Ces caractéristiques et avantages de l'invention, ainsi que d'autres, apparaîtront plus clairement dans la description suivante et les dessins joints, dans lesquels :
la Fig. 1 est une vue schématique de côté montrant un ensemble de pédale de frein selon l'invention fixé sur le tablier avant d'un véhicule, et tel qu'il se présente à l'état normal, c'est-à-dire avant un choc ;
la Fig. 2 est une même vue schématique que la Fig. 1 représentant l'ensemble de pédale de frein en cours de recul provoqué par un choc ;
la Fig. 3 est une vue schématique en perspective de l'ensemble de pédale de frein seul, dans son état normal comme à la Fig. 1 ;
la Fig. 4 est une vue en perspective selon un autre angle que la Fig. 3, représentant la partie supérieure de l'ensemble de pédale dans son même état normal ;
les Figs. 5 et 6 sont des vues schématiques en coupe transversale selon la ligne V-V de la Fig. 1 illustrant la façon dont sont accouplés de façon libérable la pédale et le bras secondaire qui lui est associé dans l'ensemble de pédale ; et
les Figs. 7 et 8 sont des vues en perspective de l'ensemble montrant la pédale libérée, selon deux angles différents pour faire apparaître chacun des côtés.

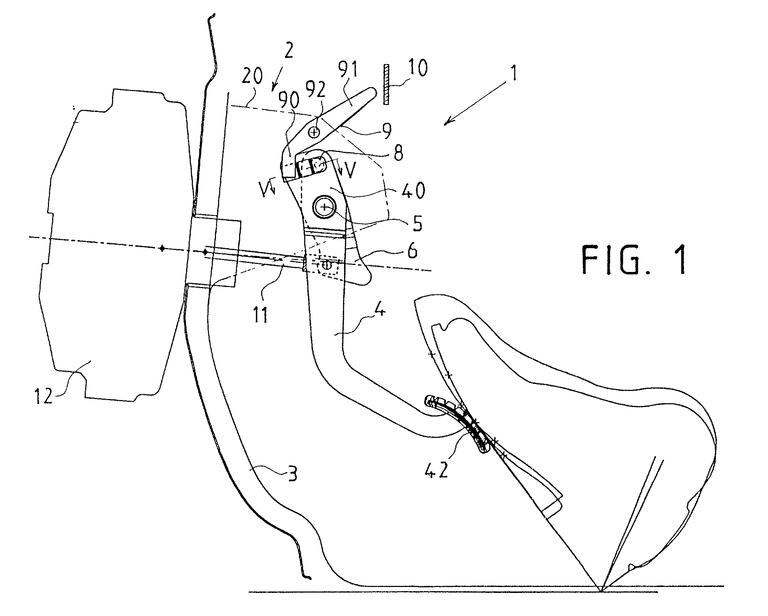

Considérant d'abord la Fig. 1, elle représente un ensemble de pédale de frein selon l'invention et son dispositif de montage 1 placé en saillie sur le tablier avant 3 de l'habitacle d'un véhicule.

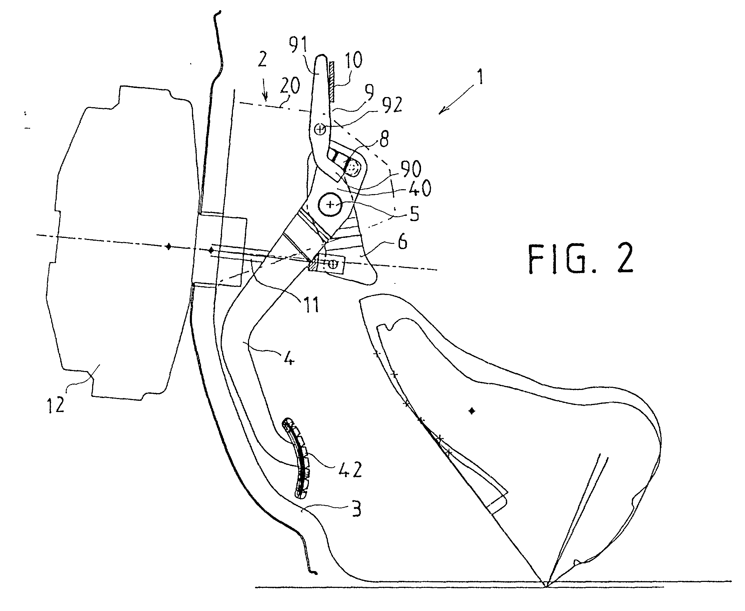

Le dispositif 1 comprend classiquement un support de pédale 2 avec deux flasques latéraux dont l'un est représenté schématiquement en traits mixtes fins aux Figs. 1 et 2, et désigné par la référence 20, le support 2 étant fixé de façon classique sur le tablier 3.

La pédale 4 comprend dans sa partie supérieure ou tête de pédale 40 un moyeu par lequel elle est articulée sur un axe de rotation transversal 5 porté de chaque côté par les flasques 20.

Selon l'invention, à la pédale 4 est associé un bras secondaire 6, également articulé à proximité immédiate de celle-ci sur l'axe de rotation 5. Le bras secondaire 6 est monté sur l'axe de rotation 5 en un point intermédiaire de sa longueur, et à son extrémité inférieure est articulé le levier de commande 11 de l'organe de freinage 12 du véhicule.

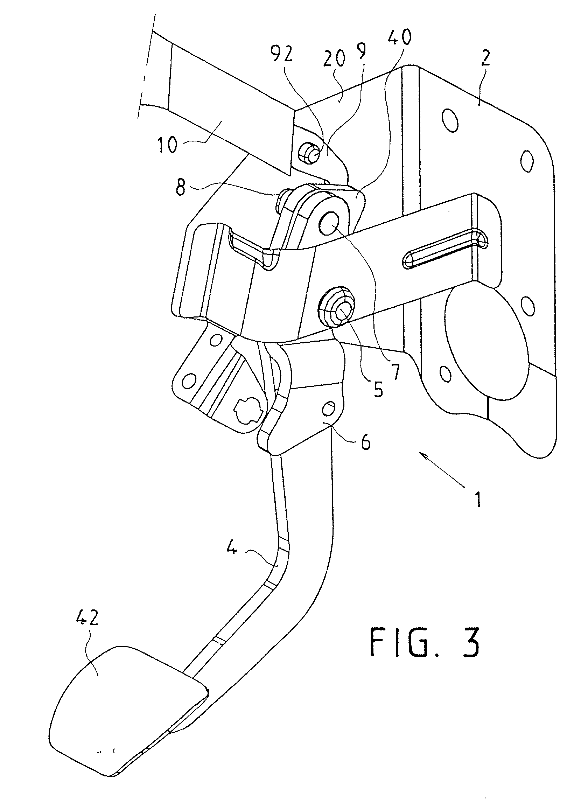

Le bras secondaire 6 est d'autre part accouplé avec la pédale 4 par un élément de liaison 7, pour être solidarisé avec elle en rotation autour de l'axe de rotation 5. Dans la forme de réalisation représentée, l'élément de liaison 7 est une tige transversale ou clavette engagée transversalement et légèrement à force dans deux trous traversants de réception 41 et 61, respectivement dans la tête de pédale 40 et dans la partie d'extrémité supérieure du bras secondaire 6, comme on peut le voir plus clairement aux Figs. 3 à 6.

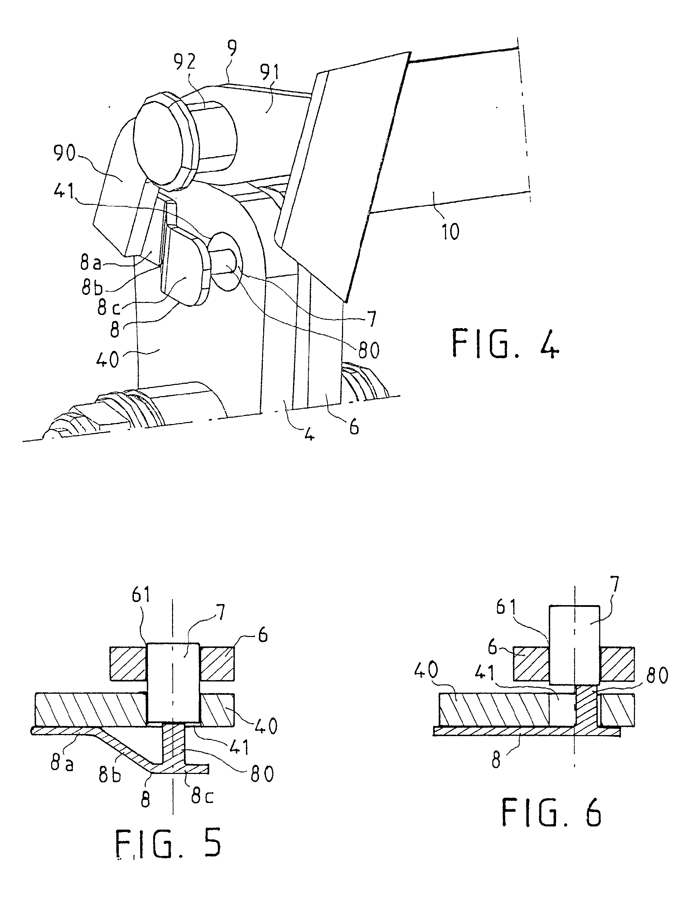

D'autre part, à la tige de liaison 7, sont associés des moyens de libération pour la chasser complètement à l'extérieur du trou 41 afin de désolidariser la pédale 4 d'avec le bras secondaire 6 en rotation autour de l'axe 5. Ces moyens de libération comprennent une patte déformable 8 soudée par une partie d'extrémité 8a sur le côté de la tête de pédale 40, et portant intérieurement en son autre partie d'extrémité 8c un pion ou doigt 80 faisant saillie transversalement face au trou de réception 41 dans la tête de pédale 40, comme l'illustre schématiquement la Fig. 5.

La patte déformable 8 a un profil de forme sensiblement en Z de manière à ce que sa partie d'extrémité distale 8c soit écartée suffisamment de la tête de pédale 40 pour que le pion 80 soit à l'extérieur du trou 41 lorsque l'ensemble de pédale est dans son état normal illustré aux Figs. 1 et 3 à 5. La partie médiane 8b de la patte 8 est de préférence oblique entre les deux parties d'extrémité 8a et 8c, de manière à constituer une rampe de glissement pour un élément mobile 9 destiné à la déformer, plus précisément à l'aplatir comme illustré à la Fig. 6 pour faire rentrer le pion 80 dans le trou 41 afin qu'il en chasse complètement la tige 7.

L'élément mobile 9 associé à la patte déformable 8 est un levier monté pivotant autour d'un axe transversal 92 porté sur le flasque 20 de même côté, au-dessus de la pédale 4 et du bras secondaire 6, et légèrement en avant de l'axe de rotation 5. Le levier 9 agit sur la patte déformable 8 par un bras coudé 90 situé juste devant la partie intermédiaire 8b, Fig. 1, et il est entraîné en rotation par un bras opposé 91 dont l'extrémité fait face à un élément d'appui 10 se trouvant derrière elle et solidarisé avec une partie fixe de l'habitacle du véhicule, telle que la traverse du poste de conduite.

Lorsque l'ensemble de pédale est dans son état normal, une pression sur le patin 42 de la pédale de frein fait tourner solidairement avec elle le bras secondaire 6 pour actionner le levier de commande 11 de l'organe de frein 12.

En revanche, lors du recul dû à un choc de l'ensemble de pédale dans l'habitacle du véhicule, le bras 91 entraîne le levier 9 en rotation autour de son axe 92 du fait de venir et de rester en butée contre l'élément d'appui 10 qui reste sensiblement fixe ou au pire ne se déplacera que plus tard. En tournant, le levier 9 aplatit par sa partie d'extrémité 90 la patte déformable 8, ce qui a pour effet de faire pénétrer le pion 80 dans le trou 41 de la tête de pédale 40, et donc de le faire en chasser la tige 7.

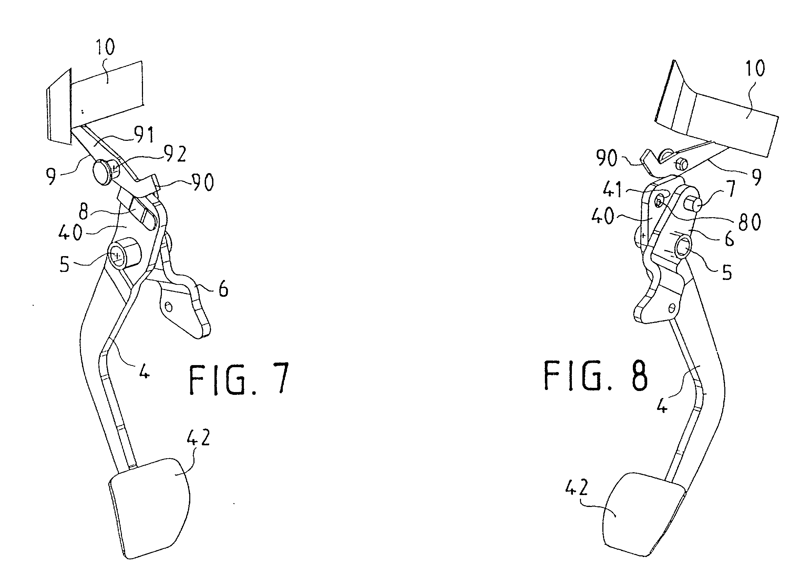

La Fig. 6 montre la patte 8 après déformation, plaquée contre le côté de la tête de pédale 40, et d'une manière telle que le pion 80 traverse complètement la tête de pédale 40, en restant toutefois légèrement écarté du bras secondaire 6. La pédale 4 se retrouve donc désolidarisée en rotation autour de l'axe 5 d'avec le bras secondaire 6, et elle peut donc pivoter indépendamment de lui, c'est-à-dire librement comme l'illustrent plus particulièrement les Figs. 2, 7 et 8.

## Revendications

1. Ensemble de pédale de frein pour un véhicule automobile, comprenant un support de pédale (2) dans lequel la pédale (4) est montée rotative autour d'un axe de rotation de pédale transversal (5) pour actionner un organe de frein (12) par l'intermédiaire d'un levier de commande (11), **caractérisé en ce qu'**à ladite pédale (4) est associé un bras secondaire (6) monté apte à tourner autour dudit axe de rotation de pédale (5) indépendamment de la pédale (4), sur lequel est articulé ledit levier de commande (11), **en ce que** la pédale (4) et ledit bras secondaire (6) sont accouplés par un élément de liaison (7) en un point distant dudit axe de rotation de pédale (5) pour être solidarisés en rotation autour de celui-ci, et **en ce qu'**audit élément de liaison (7) sont associés des moyens de libération coopérant avec un élément d'appui (10) solidaire d'une partie sensiblement fixe du véhicule pour rendre inopérant ledit élément de liaison (7) afin de libérer en rotation la pédale (4) d'avec ledit bras secondaire (6) en cas de recul dans l'habitacle dudit support de pédale (2) lors d'un choc frontal ou dirigé vers l'arrière.

2. Ensemble de pédale de frein selon la revendication 1, **caractérisé en ce que** ledit élément de liaison (7) entre la pédale et ledit bras est une tige transversale engagée dans deux trous traversants (41, 61) formés respectivement dans la pédale (4) et dans ledit bras secondaire (6), lesdits moyens de libération comprenant un poussoir (80) disposé en bout de ladite tige (7) pour la chasser complètement de l'un desdits trous (41, 61) de la pédale (4) et dudit bras secondaire (6).

3. Ensemble de pédale de frein selon la revendication 2, **caractérisé en ce que** ledit poussoir (80) est un pion se trouvant en saillie sur l'extrémité libre d'une patte déformable (8) soudée sur le côté de la pédale (4), ladite patte déformable (8) ayant un profil en Z et étant déformable par aplatissement par un élément mobile desdits moyens de libération.

4. Ensemble de pédale de frein selon la revendication 3, **caractérisé en ce que** la partie médiane (8b) de la patte déformable (8) est oblique entre ses parties d'extrémité (8a, 8c), de manière à constituer une rampe de glissement pour ledit élément mobile destiné à la déformer.

5. Ensemble de pédale de frein selon la revendication 3 ou 4, **caractérisé en ce que** ledit élément mobile est un levier pivotant (9).
